Europäisches Patentamt

European Patent Office

Office européen des brevets

(19)

(11) Numéro de publication: **0 130 654**
A2

# (12) DEMANDE DE BREVET EUROPEEN

(21) Numéro de dépôt: **84200948.2**

(22) Date de dépôt: **29.06.84**

(51) Int. Cl.⁴: **E 04 B 1/60**

(30) Priorité: **04.07.83 BE 2060147**

(43) Date de publication de la demande: **09.01.85**
**Bulletin 85/2**

(84) Etats contractants désignés: **AT CH DE FR GB IT LI LU NL SE**

(71) Demandeur: **ISOBAR, personenvennootschap met beperkte aansprakelijkheid, Harelbeeksestraat 77, B-8720 Kuurne (BE)**

(72) Inventeur: **Bouckaert, Daniel, Hulstestraat 217, B-8720 Kuurne (BE)**
Inventeur: **Bouckaert, Rik, Hulstestraat 217, B-8720 Kuurne (BE)**

(74) Mandataire: **Donné, Eddy, M.F.J.Bockstael Arenbergstraat 13, B-2000 Anvers (BE)**

(54) Perfectionnements apportés à des boîtiers à enrober d'une matière cellulaire.

(57) Perfectionnements apportés à des boîtiers destinés à être enrobés d'une matière cellulaire (matière mousse), caractérisés en ce qu'autour de l'ouverture d'entrée (6) du boîtier (1), qui est entièrement fermé à l'exception de cette ouverture d'entrée (6), est prévue une gorge périphérique ininterrompue (10).

EP 0 130 654 A2

"Perfectionnements apportés à des boîtiers à enrober d'une matière cellulaire"

La présente invention a trait à des perfectionnements apportés à des boîtiers destinés à être enrobés d'une matière cellulaire ou matière mousse, par lesquels s'entendent tous les éléments ouverts d'un côté et destinés à être enrobés d'une matière cellulaire ou matière mousse, de manière que l'extrémité ouverte reste accessible d'un côté latéral ou autre de l'enrobage.

Une application pratique des boîtiers de ce genre se trouve, par exemple, dans le domaine des dispositifs de verrouillage pour la réunion de panneaux ou d'autres éléments analogues, tels qu'un des dispositifs de verrouillage faisant l'objet du brevet belge n° 880.790.

En effet, on sait que ces dispositifs de verrouillage connus comportent un boîtier exécuté, par exemple, en une matière plastique appropriée et servant de logement pour le verrou proprement dit et les éléments avec lesquels celui-ci coopère, boîtier qui est entièrement fermé à l'exception d'un côté et est enrobé de manière appropriée sur les bords d'un panneau, tel qu'un panneau sandwich, composé en général d'une matière plastique cellulaire ou matière mousse, telle que le polyuréthane mousse ou autre.

On sait également que l'enrobage des boîtiers de ce genre d'une matière cellulaire s'effectue de manière appropriée et au bon endroit, en les disposant dans le moule prévu à cet effet, de manière que leur côté ouvert s'applique étroitement à la paroi du moule pour éviter, lors du façonnage du panneau, toute pénétration de matière mousse dans le boîtier, qui le rendrait inutilisable.

Or, l'expérience a démontré que, si le côté ouvert du boîtier ne s'applique pas parfaitement à la paroi du moule, de la matière mousse pénètre dans le boîtier sous la pression régnant dans la matière au cours de son gonflement par moussage.

Les dispositions prises jusqu'à présent pour remédier au susdit inconvénient du procédé de fabrication traditionnel des boîtiers concernés consistent en ce qu'on ferme l'ouverture du boîtier, avant sa disposition dans le moule, par exemple au moyen d'une bande adhésive enlevée ou non après l'enrobage du boîtier dans le panneau.

Inutile de souligner que cette disposition supplémentaire présente l'inconvénient, d'une part, d'augmenter le prix de revient et, d'autre part, de rendre fort difficile et même impossible la formation d'un bord latéral net et lisse.

C'est pour remédier aux inconvénients susmentionnés du procédé de fabrication connu que la présente invention prévoit la mise en oeuvre de moyens appropriés qui, disposés autour de l'extrémité ouverte du boîtier à enrober, s'opposent efficacement à toute pénétration de matière mousse dans le boîtier sans que son ouverture ne faille être étanchement fermée, d'une part, et assurent un fini impeccable et de grande précision du bord latéral concerné du panneau ou autre, d'autre part.

A cet effet, les dispositions préconisées par l'invention en vue de la réalisation des perfectionnements apportés aux boîtiers enrobés, auxquels elle a trait, sont essentiellement caractérisées par le fait qu'est prévue une gorge périphérique

3

0130654

ininterrompue autour de l'ouverture d'accès du boîtier à enrober, qui est entièrement fermé à l'exception de cette ouverture.

Les caractéristiques et avantages de l'invention ressortiront plus clairement de la description suivante d'un mode de mise en oeuvre préféré, donnée exclusivement à titre d'exemple sans la moindre intention restrictive, avec référence aux dessins annexés, où

la figure 1 représente en vue latérale un boîtier, c'est-à-dire, en l'occurrence, un dispositif de verrouillage perfectionné selon l'invention;

la figure 2 représente le boîtier selon la figure 1 vu dans la direction indiquée par la flèche F2;

la figure 3 représente à plus grande échelle une coupe du dispositif selon la figure 1, pratiquée suivant la ligne III-III de cette dernière; et

la figure 4 représente une coupe analogue à celle de la figure 3, le boîtier selon l'invention étant enrobé d'une couche d'une matière mousse et l'ensemble ainsi formé étant disposé dans le moule servant à former cette couche de matière mousse.

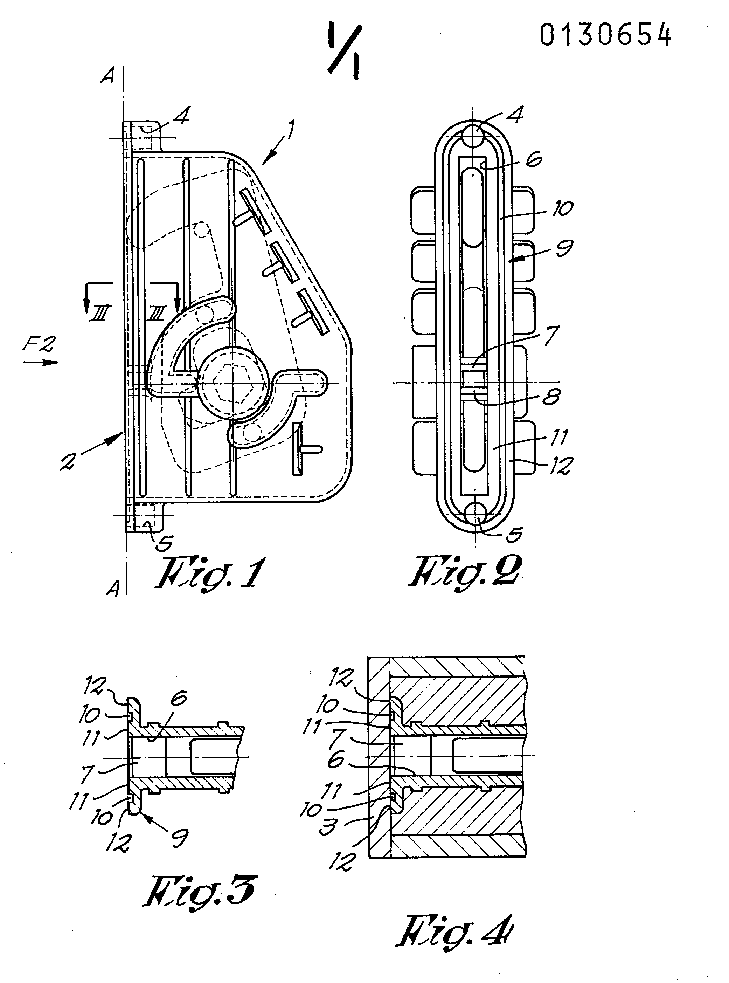

Les dessins annexés représentent un boîtier 1, c'est-à-dire, en l'occurrence, un dispositif de verrouillage, décrit en substance dans le brevet belge n° 880.790, qui est entièrement fermé à l'exception du côté 2, en vue de son enrobage jusqu'à la ligne A-A dans un panneau ou un autre dispositif analogue.

Le boîtier est, à cet effet, disposé dans un moule 3 et y maintenu de manière appropriée au niveau requis, par exemple au moyen d'ergots de la paroi intérieure du moule (non représentes) avec lesquels coopèrent des trous 4 et 5 du boîtier 1, qui, en particulier dans son ouverture d'entrée 6, présente deux petits éléments transversaux, respectivement 7 et 8,

4

0130654

avec lesquels coopère un élément non représenté, susceptible d'être commandé de l'extérieur du moule 3 pour bien serrer le boîtier 1 contre la paroi intérieure du moule 3.

Enfin, selon l'invention, la bride 9 entourant ladite ouverture d'entrée 6 présente, sur toute sa périphérie, une gorge ininterrompue 10 qui la divise, pour ainsi dire, en deux parties 11 et 12. Il s'ensuit que, lors de l'enrobage du boîtier 1, c'est-à-dire lors du remplissage du moule 3, la matière mousse qui, autrement pénétrerait entre le moule 3 et la partie 12 de la bride 9 située entre le boîtier 1 et le moule 2, pénètre dans ladite gorge 10, qui joue ainsi le rôle d'obstacle grâce au fait que la petite quantité de matière mousse présente dans la gorge 10 réagit fort rapidement de manière à la remplir pratiquement instantanément et assurer ainsi une étanchéité efficace s'opposant à toute pénétration ultérieure de matière mousse.

On obtient ainsi, de manière aussi simple qu'efficace, sans interventions supplémentaires, un boîtier protégé contre toute pénétration de matière mousse.

Il va sans dire que l'invention ne se limite pas à l'exemple de mise en oeuvre décrit précédemment et illustré aux dessins annexés, mais prévoit toutes sortes de modifications et d'adaptations au point de vue forme et dimensions, à la condition de ne pas dépasser son cadre défini par les revendications formulées ci-après.

0130654

Revendications.

1.- Perfectionnements apportés à des boîtiers à enrober d'une matière cellulaire (matière mousse), caractérisés en ce qu'autour de l'ouverture d'entrée (6) du boîtier (1), qui est entièrement fermé à l'exception de cette ouverture (6), est prévue une gorge périphérique ininterrompue (10).

2.- Perfectionnements selon la revendication 1, caractérisés en ce que ladite ouverture d'entrée (6) est entourée d'une bride (9) munie de ladite gorge périphérique ininterrompue (10).

**Fig.1**

**Fig.2**

**Fig.3**

**Fig.4**

0130654